# EUROPEAN PATENT SPECIFICATION

(11) **EP 2 729 672 B1**
(45) Date of publication and mention of the grant of the patent: **26.08.2020**
(21) Application number: 12806885.5
(22) Date of filing: 06.07.2012
(51) Int. Cl.: F01N 3/021, F01N 3/022, F01N 3/033, F01N 3/035, F01N 3/08, B01D 46/00, B01D 46/52, B01D 46/10, B01D 53/86, B01D 53/94, F01N 13/00

(54) **NEW PURIFYING ASSEMBLY**
NEUE AUFREINIGUNGSANORDNUNG
NOUVEL ENSEMBLE DE PURIFICATION

(30) Priority: 07.07.2011 FI 20115732
(43) Date of publication of application: 14.05.2014
(73) Proprietor: Dinex Finland Oy, 41331 Vihtavuori (FI)
(72) Inventor: MAUNULA, Teuvo, 90230 Oulu (FI); KINNUNEN, Toni, 90440 Kempele (FI)
(74) Representative: Berggren Oy, Tampere
(86) International application number: PCT/FI2012/050716
(87) International publication number: WO 2013/004917

(56) References cited:
- WO-A1-02/11862
- WO-A1-2006/014129
- WO-A1-2011/001027
- DE-U1-202006 011 281
- GB-A- 2 465 151
- US-A1- 2008 241 032
- US-A1- 2010 212 301
- US-B1- 6 312 650

## Description

### Field of the invention

The invention relates to a particle separator for use in the treatment of particulate-containing fluids, and to a purifying assembly provided with such a particle separator. The invention relates also to a method for manufacturing and operating such a particle separator.

### Background technology

Exhaust and flue gas emission limits in engine and boiler projects become more stringent all the time, which is why it is inevitable to use aftertreatment methods for attaining threshold values. In diesel projects, the particle (PM = particulate matter) and NOₓ emission standards are most critical, but the carbon monoxide and hydrocarbon emission standards are relatively easy to achieve by using oxidation catalyzers. In engines, the reduction of NOₓ can be effected by applying methods of engine technology (e.g. EGR = Exhaust Gas Recirculation), with combustion temperature decreasing but CO, HC and PM emissions increasing. Diesel particulate filters (DPF = Diesel Particulate Filter) are generally used in diesel projects for reducing particles with a conversion of more than 90-95%. These full filters can also be replaced with partial filters, also known as POC (Partial Oxidation Catalyst) and having a filtering efficiency of about 40-70%. High performance oxidation catalysts enable removing a major portion of the volatile hydrocarbon-containing fraction (VOF = volatile organic fraction or SOF = soluble organic fraction) of PM. Usually the proportion of VOF is 10-40%, but with certain engines and in certain driving conditions the VOF of particles can be as high as 70-90%. Such conditions are created, among others, in city driving, with outdated engines and/or by certain fuels. Thus, the oxidation catalyst, partial filter and full filter cannot be categorized explicitly according to separation efficiency as the separation efficiencies thereof overlap each other in terms of conversion rates, depending on the operating condition.

The full filters refer to wall-flow type (forced flow through a porous wall) filters, the operation of which is based on skin filtration with a particle layer building up on the wall of a flow channel, nor are hardly any particles collected inside the porous wall after the initial buildup. Such skin filtration-based filters have a mean pore size in the wall of about 8-25 µm, which in ordinary sizing is sufficient to remove over 95% of particulate mass. In full filters, the pressure loss increases continuously during operation as a result of non-combusted ash, even if a total removal of combustible soot/carbon is achieved. These filters are made by pressing from wet paste a cell structure, wherein every other channel is closed and the opposite channels are respectively closed at the other end. The final ceramic structure (cordierite, SiC, Al-titanate, SiN or other respective ceramic structures) is achieved with a high temperature heat treatment. In a cell structure, the gas is thus forced to flow through porous (generally 40-50% porosity) walls for separating particles from gas. The ceramic cell is usually round or angular, and mechanical durability is a challenging task, especially in vehicle projects and in situations where conditions fluctuate over an extensive range. It is best to make a larger filter in smaller units. The SiC filter must almost always be made from separate small blocks (maximum edge about 50-100 mm), which are cemented together with plaster as the cell is otherwise shattered by heat expansion. Mechanically, the cell is supported with installation wool inside a usually metallic mantle. It is not possible to sensibly construct narrow ring structures or the like structures from ceramic filters with possible uses in the systems as such structures do not have a sufficient strength mechanically or thermally.

Partial filters provide the advantage of maintenance freedom as non-combusted ash and excess particles are able to depart from the assembly without the use of external energy, as opposed to full filters in which most of the non-combusted ash remains on a front surface of the filter. Roughly between skin and partial filtration in terms of their separation efficiency are found filters based on deep filtration, which usually have the separation efficiency within the range of 50-90%, the estimated optimum from the standpoint of practical use being about 60-80%. The deep filtration-based filters are usually manufactured from ceramic or metallic fibers or foam or sintered metal. The fibers in a filter can take the form of a mattress or pleated mats. In pleated structures, the exhaust gas flows usually in radial direction from the outer periphery inwards, whereby there is sufficient room for particles to accumulate inside the structure, on the surface and in the void space upstream of the filter. In filters based on the use of fibers, the filtration is based on a diameter of the fibers favorable from the standpoint of filtration. There is typically a very high proportion of void (>90% porosity) in nonwoven fiber layers or mats, but in typical skin filtration-based filters (e.g. cordierite, SiC or Al-titanate), the porosity in a filtering wall is typically 40-50%, and in special high porosity filters as high as 60-70%. The separation efficiency of filters, wherein particles accumulate inside a filter phase (deep filtration), not on the surfaces of channels, is highly dependent on flow rate and linear velocity. The separation efficiency of deep filters usually decreases as the linear velocity increases and the efficiency of typical partial filters increases as the linear velocity increases (filtration is based on enhanced material transfer), which makes a clear functional difference therebetween. Many deep filters start allowing particles through at higher flow rates. In addition, there are prior known assemblies made of steel wool, ceramic foam, for a candle structure or a fiber-coated pipe structure. The separation of particles can also be carried out by electrostatic separation or water scrubbers. In all filters, the separation efficiency depends also on particle size.

The essential difference between partial filters and full filters is that, in full filters the fluid is forced through a totally filtering/collecting layer, while in partial filters there are also open channels through the filter. Partial filters are often provided with screens, fibrous mats or perforated plates, onto or into which the particles may migrate in response to pressure differences and turbulence in various channels. The deep and partial filters are distinguished from each other by working mechanism and structure, even if the same materials had been used in both. The flow can be forced completely through a fibrous mat (deep filtration), or the fibrous mat has been constructed as a cell, such that the main flow proceeds through the channels of a cell manufactured from a corrugated and possibly straight fibrous mat, whereby particles are nevertheless trapped with a high degree of separation on wall surfaces (partial filter).

The structure of partial filters has been remodeled from oxidation catalyst, such that the separation of particles is improved by replacing a ceramic or metal cell with structures which feature various penetrations, claws or protrusions in the walls, and constrictions or filtering elements in the cell's flow channels. The penetrations or filtering elements have been constructed by using ceramic or metal screens, wools or porous materials instead of ordinary metal or ceramic walls. Partial filters are usually provided with a cell assembly, which in a main flow direction comprises an axial open channel system. The main flow is similar to what occurs in ordinary catalyst assemblies, but the particle separation has been enhanced by forcing the flow to partially proceed in radial direction through screens, fibers, or meshes in the wall, while being regulated by pressure difference. The radial direction flow is nevertheless haphazard in various directions, the vector consistent with main flow being averagely axial. Another underlying principle is that the flow comes in at one end and out from the opposite side at the other end of a cell, which is usually round or angular.

Ordinarily, the filtered carbon matter (soot) of particles is combusted thermally by means of supplemental heat. Soot can be oxidized by an intense combustion reaction with oxygen at over 550-600°C temperature, or slowly, with the reaction already starting at lower temperatures (250-350°C), by means of NO₂. The NO₂, generated in an oxidation catalyst, oxidizes soot at reasonably low temperatures (>250-300°C) as long as the oxidation catalyst is sufficiently effective.

The removal of carbon fraction calls for a longer dwell time in the filter or catalyst. A prior known CRT method (Continuous Regenerating Trap) comprises a Pt-containing oxidation catalyst, followed by an uncoated or catalyst-coated DPF (EP 341,832). The problems of this passive method with a conventional full filter are related to situations in which NO₂ is not generated in a sufficient amount, e.g. in congested city driving, and the method requires a very low-sulfur fuel (S<10 ppm) for minimizing sulfate formation in an effective and expensive Pt-containing oxidation catalyst. In the event of using a fuel richer in sulfur, the increasing formation of sulfates (SO₂ → SO₃ → SO₄ catalyzed by a Pt-catalyst) wipes out the benefits gained by a filter, or the filter fills up too quickly which increases regeneration frequency and blocking risk. The blocking of a full filter (DPF) is unacceptable in any event as it brings the driving to a halt. It is for this reason that most particle filters feature active regeneration, which type of principle has already been practiced for several decades. In new modern diesel automobiles, the active filter regeneration can be arranged by a periodically conducted temperature rise, usually to the range of 600-650°C. Despite the regeneration of carbon, the full filters gather non-combusted ash, the amount of which must be regarded in sizing, lubricant recommendations, and in possible maintenance procedures.

The regeneration of particle filters has been conducted by using not only the combination of engine throttling (adjustment of air/fuel ratio to the proximity of a stoichiometric condition) and supplementary fuel injection but also electric heating, plasma (SAE Paper 1999-01-3638) or burners, which enable bringing supplemental heat and combusting soot. The supplementary fuel can be injected either into the cylinder (post-injection) or into the exhaust system upstream of an oxidation catalyst and/or a catalyzed particle filter. Combustion can also be enhanced with additives to be injected into the fuel and containing e.g. Ce, Fe or Sr, which, upon dispersing on the surface of soot, decrease the combustion temperature e.g. to about 500°C and also enhance the regeneration taking place with NO₂.

The catalytic coating of particle filters can be used for promoting the catalytic combustion of soot (SAE Paper 8500015, 1985), the formation of NO₂, or for oxidizing the fuel injected in a purpose of raising temperature. The catalysts, which are most effective in the oxidation of hydrocarbons (from fuel), carbon monoxide and NO, and which are most durable, are based on the use of platinum (Pt). The formation of a high NO₂ content calls for the use of Pt in particular, while in the oxidation of hydrocarbons and CO, also palladium (Pd) is active. The catalytic combustion of soot has been conducted by using various catalysts, which are coated on a filter and which contain for example vanadium, copper, potassium, molybdenum and compounds of the like elements. These catalysts typically exhibit good mobility to the surface of solid soot or contain mobile oxygen.

As opposed to full filters, the regeneration of partial filters has been primarily based on passive regeneration with NO₂. A requirement from the standpoint of regeneration has been that temperatures and the NOₓ/C ratio be sufficiently high on average, whereby it is possible to form an adequate amount of NO₂ and the NO₂+C reaction is sufficiently fast to impede the cumulative buildup of particles.

In modern aftertreatment systems (ATS), it is necessary to combine several different functional units: various particle filters (full flow or partial flow), various oxidation catalysts, removal catalysts for oxides of nitrogen (SRC, LNT=Lean NOₓ Trap), ammonia slip catalyst (ASC) and hydrolysis catalyst. The same system must also take care of muffling. The pressure loss, volume and manufacturing costs of the system must be minimized, and the efficiency and durability must be maximized. This subjects the system to contradictory requirements difficult to work out with prior known assemblies. Several units must be placed in a successive and nested configuration in the muffler housing, and the system also requires a large reductant tank (urea), and, in the case of full filters and LNT, fuel injections and/or several sensors, and electricity supplies to actuators. The presence of a full filter unavoidably increases the average pressure loss to a totally different range and the blocking risk is significantly higher than in systems without a full filter.

Publication US 6312650 B1 discloses a silencer for silencing and purification of exhaust gases. Publication US 2010/0212301 A1 discloses a flow device for an exhaust system that includes a body that defines an interior cavity.

### Description of the invention

It is an objective of the invention to provide a particle separator for use in the treatment of particulate-containing fluids, which reduces primarily the amount of particles from effluent gas and remains in operation substantially block-free, thus causing a low pressure loss.

In order to achieve this objective, the invention is characterized by features presented in the independent claims. Other claims present a few preferred embodiments of the invention.

The particle separator according to the invention comprises an annular open particle separator assembly RAPE, which includes an annular particle separator component having corrugated screens, mats, membranes and/or foils coupled together and provided with meshes and tortuous open channels therebetween. To the annular particle separator component is formed an outer skin and an inner skin, which are made of metal, a fibrous material and/or other material, and inside which is a void section for fitting at least one functional unit, such as an oxidation catalyst, a removal catalyst for oxides of nitrogen, a full filter, an open particle separator, a three-way catalyst, a reformation catalyst, an ammonia slip catalyst and/or a urea hydrolysis unit. A purifying assembly PUR according to the invention is in turn characterized by one or more particle separators of the invention.

In comparison with full or partial filters based on the prior art, the new type annular partial particle separator assembly, and the system containing this assembly, can be applied particularly jointly with several functional aftertreatment units, providing thereby a durable alternative assembly with a high cleaning capacity, maintenance freedom/non-blocking quality in all operating conditions, and a competitive manufacturing cost.

According to one object of the invention, the annular particle separator component is coated with a catalyst, which catalyzes the oxidation of hydrocarbons, carbon monoxide, hydrogen, oxides of nitrogen, ammonia and/or particles, and/or the reduction of oxides of nitrogen with hydrocarbons, ammonia and the like reductants, and/or which adsorbs oxides of nitrogen. According to one object of the invention, the catalyst contains platinum, palladium, rhodium, iridium, ruthenium and/or vanadium, which catalyze an oxidation and/or reduction reaction of exhaust and effluent gases. According to one object of the invention, the particle separator component is coated with a catalyst in such a way that the meshes remain open. The assembly and the system enable preferably the use of coatings which possess catalytically active components for the oxidation of carbon monoxide, hydrocarbons, nitric oxide (NO) and particles, and for the reduction of oxides of nitrogen. The assembly provides several new possibilities of arranging aftertreatment units in a favorable fashion and a possibility of maximizing the volume of a partial particle separator for the direct promotion of particle conversion. At the same time, the manufacturing and operating costs of such an assembly are low.

The invention is based on the open particle separator structure RAPE making up an annular element, inside which can be fitted other functional units. Upstream and/or downstream of the open particle separator assembly RAPE can also be present other annular functional units, e.g. an annular oxidation catalyst R-DOC. With the annular RAPE are employed other units, which are one or more oxidation catalysts, an SCR catalyst, LNT, a full filter, an open filter, a hydrolysis catalyst, an ammonia slip catalyst, or some other, e.g. a reformation catalyst, operating with these units. According to one object of the invention, the annular open particle separator RAPE is arranged to remove particles and the void section in the middle has been provided with a removal unit for oxides of nitrogen, such as for example an SCR catalyst or an NOₓ adsorption catalyst.

The fields of use for the invention include, among others, exhaust, flue gas and effluent gas applications in mobile or stationary projects. Generally, the gas mixture is such that it contains excess oxygen continuously or averagely. In the combustion, the result of which is exhaust gas, it is possible to use any type of gaseous (for example methane, propane, biofuels), liquid (light or heavy fuel oil, diesel, gasoline or biofuels) or solid fuel.

The assembly according to the invention can be used in totally lean conditions (excess oxygen), or conditions in which from time to time is conducted a short-term mixture ratio adjustment for a stoichiometric or rich ratio. The purpose of a mixture ratio adjustment, and a temperature rise resulting therefrom, is a complete or partial regeneration of the filter from particles and built-up toxins or adsorbents. Another possible reason for a mixture ratio adjustment is that the system comprises other catalysts (e.g. NOₓ adsorption catalyst), which from time to time require stoichiometric or rich conditions for regeneration.

Partial filters were used in the early 2000s exclusively in combination with a DOC in diesel projects. Due to the new emission standards, the usage can be expanded to projects in which the removal of oxides of nitrogen is also required. In many applications, the primary particulate reducing method is a full filter, because more than 90% of particles must be removed. Temperatures are very low in many projects, nor are the conditions sufficiently passive for regeneration and thus the high performance filters begin to block and the conditions are difficult for filters using active regeneration. Full filters inevitably become completely obstructed, even with the use of active regeneration, because the non-combusted ash cannot be cleared without maintenance and cleaning. This maintenance cycle depends also on the properties of fuel and lubricant (ash matter). In a malfunction incident (non-standard fuel, other impurities, faulty engine operation), the blocking may also occur quite abruptly.

The use of a full filter increases remarkably the average pressure loss, even if regeneration were efficient, which, together with active regeneration, increases fuel consumption. Full filters have easily a volume 2-4 times that of the engine, which space demand is critical in many projects. The use of an open partial filter enables a significant decrease in average fuel consumption, space demand, nor is the open separator obstructed in normal operating conditions. The advantage in fuel efficiency has prompted many engine manufacturers to consider an option of calibrating the engine for such raw emissions which enable managing without a full filter. The calibration of particle emissions to low levels is tantamount to efficient combustion and fuel economy, but at the same time the NOₓ raw emissions increase, whereby the effective aftertreatment is needed for NOₓ. Euro 5-6 for vehicles and stage 3B-4 for off-road machines represent emission limits which involve DOC, SCR, and a particle filter which enables the removal of more than 30-90% of particles. In addition, there may be included other units and/or catalysts in association with these units. If PM emissions are low, it is possible to manage by using an open partial filter (PM conversion about 40-70%). Fitting these units together requires various cell and space solutions. It is possible to employ cylindrical cells for all units, which cells are in succession as required by a particular function. In such solutions, useless space is easily left between the cells and, because of mechanical weakness, it is not worthwhile to make ceramic or extruded cells in annular shape, a configuration in which a round cell could be wrapped.

A few applications of the invention are depicted in the accompanying figures:
Fig. 1. An annular open purifying assembly (RAPE) for the separation and removal of particles.
Fig. 2. The corrugation and properties of walls (a meshed screen, a perforated foil, a mat or a membrane) used for constructing an open particle separator (RAPE).
Fig. 3. RAPE in an assembly DOC+RAPE.
Fig. 4. A catalytic aftertreatment system: R-DOC+RAPE+SCR, which makes use of RAPE.
Fig. 5. A catalytic aftertreatment system: SCR+R-DOC+RAPE, which makes use of RAPE.

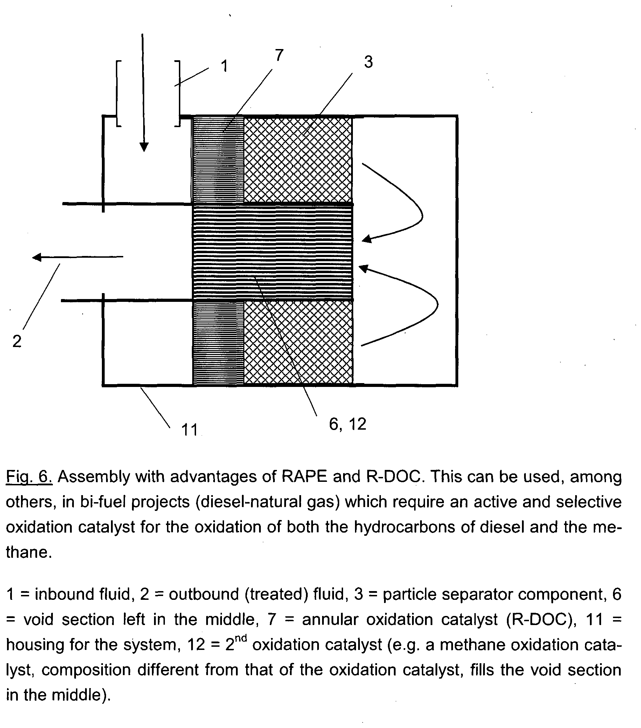

Fig. 6. An assembly with advantages of RAPE and R-DOC. This can be used e.g. in bi-fuel projects (diesel-natural gas), which require an active and selective oxidation catalyst for the oxidation of both the hydrocarbons of diesel and the methane.
Fig. 7. An assembly with advantages of RAPE and two different R-DOCs, along with an SCR catalyst.
Fig. 8. An assembly with advantages of R-DOC and RAPE, along with a particle filter.
Fig. 9. An assembly with R-DOC and RAPE in the form of a ring structure and an NOₓ adsorption catalyst in the middle.
Fig. 10. An assembly with advantages of RAPE and R-DOC, along with an SCR and NH₃ slip catalyst present in the middle.
Fig. 11. An assembly with advantages of RAPE and R-DOC, along with a hydrolysis catalyst (blender) present in the middle and with an SCR catalyst.

Symbols used in the figures are explained in the figures.

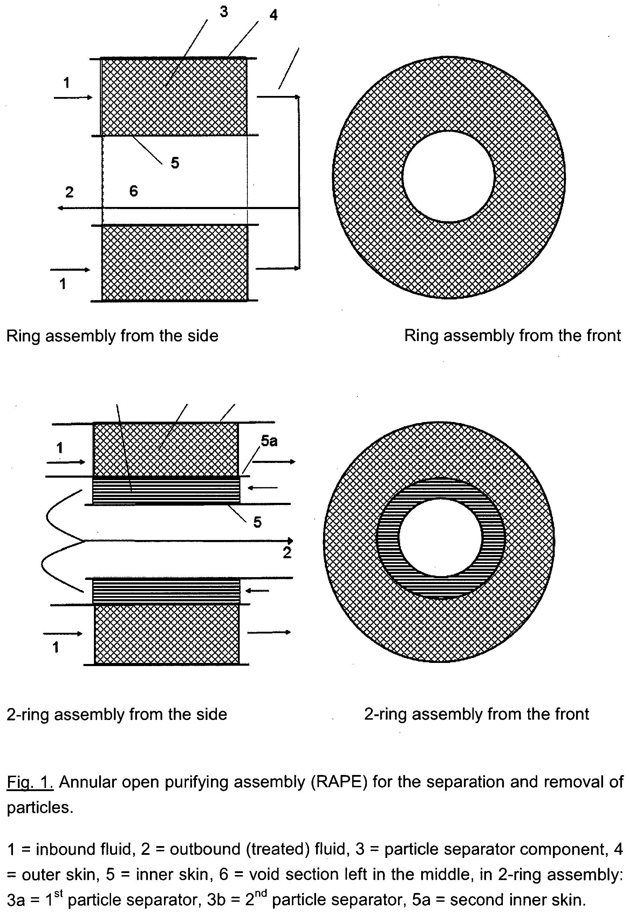

One basic assembly of the invention is shown in fig. 1. A fluid (1) (usually exhaust gas) proceeds into an annular particle separator (3), which is present between an outer (4) and an inner skin (5) and which is made of a corrugated, mechanically durable metal screen/membrane/perforated plate capable of being rolled up for an annular cell having open flow channels, and the separation of particles has been enhanced by making use of screens, tortuous channels and meshes through the walls in the assembly. The assembly separates substantially more particles than ordinary straight channel oxidation catalysts. A treated fluid (2) contains particles usually in an amount about 30-80% less than the inbound fluid (1), the conversion depending on conditions. In the middle of the particle separator is left a void space (6), which can be utilized as a flow channel or in which can be accommodated other functional, preferably catalytic units.

According to one object of the invention, the ratio between the face areas of an annular particle separator component and a void space left in the middle is within the range of 0.02-0.98, preferably 0.25-0.75. This ratio has been designed on the basis of required volumes. The RAPE volume is about 1-4 times the engine volume, preferably 1.5-2.5 times the engine volume, and the NOₓ removal unit has a volume which is about 1.5-5 times, preferably 2-3 times the engine volume. The volume required by a full filter for the void space is approximately equal to that. If there were an empty pipe in the middle, it would be advisable to leave a sufficient volume even for that in order not to constrict unnecessarily the flow of fluid.

According to one object of the invention, the average flow directions of fluid in the particle separator component and in the void section are in axial direction opposite to each other. Hence, the idea is a nested configuration of two or more cells with an open particle separator on its outer periphery. The flow may first pass in its entirety by way of the outer periphery or the inner periphery, depending on which other units are included in the system. In this configuration, flow directions in the cells of the inner section and those of the annular outer periphery are opposite to each other, which distinguishes this configuration from nested configurations in which the flow is co-directional inside and on the outer periphery. Thus, the nested configurations are not optional flow channels. Inside can be for example one or more oxidation catalysts, an SCR catalyst, LNT, a hydrolysis catalyst (a static blender for mixing the reductant and dispersing it into a reactive form), an ammonia slip catalyst ASC, a full filter, a partial filter and/or some other equivalent type catalyst or unit capable of being used in aftertreatment. Because several diesel projects may exhibit conditions in which the full filter is not regenerated or fills up with ash, the driving will stop once the filter is obstructed.

There can also be more than one assembly of the invention in a nested configuration, whereby the flow direction is alternately in different axial directions through the assembly. There can also be at least two RAPE assemblies in a nested configuration, wherein the flow is in one direction and the flow is optional through each unit, and there is a void space in the middle thereof containing functional units as mentioned earlier. In adjacent RAPEs, the separation efficiency can be unequal, the regulation of which has been managed e.g. on the basis of mesh number (corrugation height). Thereby, the flow directions in a unit present in the void space and in adjacent RAPEs are opposite to each other.

The open particle separator (APE) refers to structures, which instead of a dense pore or fiber pattern of full filters are provided with open channels, wherein the adherence of particles to flow walls has been accelerated by using tortuous, occasionally contracting and expanding channel sections with penetration paths through the walls, contributing to the equalization of pressure difference between parallel channels. These conditions promote the adherence of particles to the walls, which function as collecting surfaces and which are preferably made of screens, membranes or fibrous mats (or combinations thereof) that are metallic or ceramic. Typically, the collecting efficiency lies within the range of 40-80%, which is distinctly lower than what is obtained with cell type full filters, such as wall-flow filters.

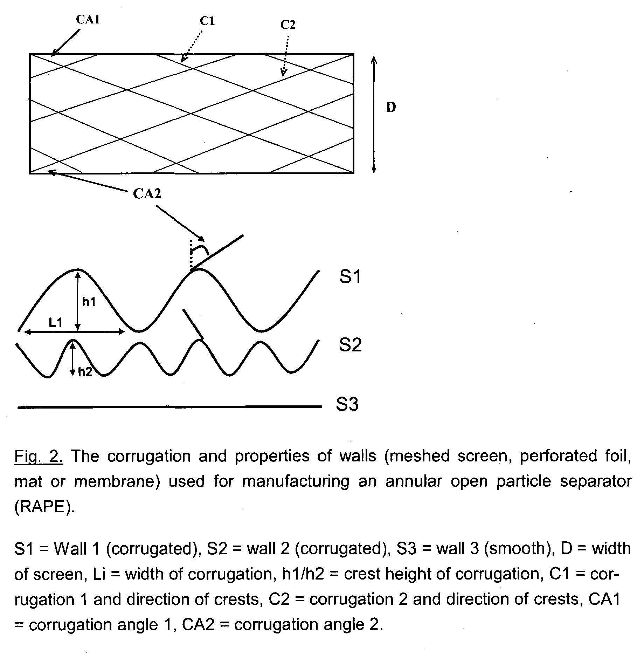

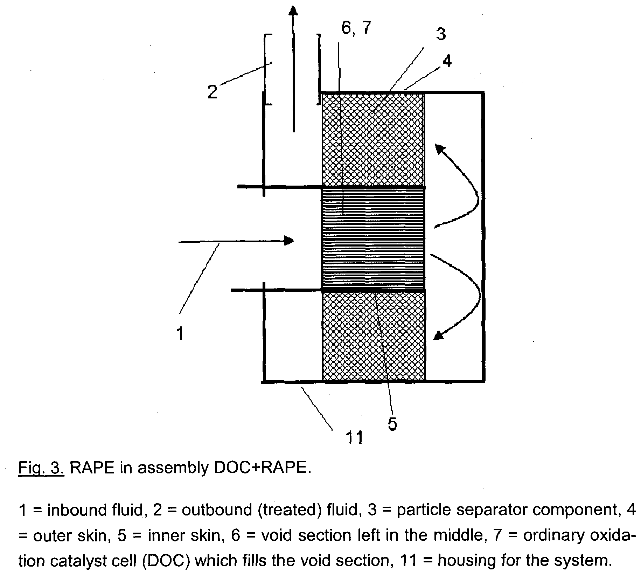

According to one object of the invention, the particle separator component consists of at least two side-by-side oblique corrugated, meshed screens of metal, membranes or foils, which have the corrugation crests thereof extending in directions diverse from each other, resulting in open tortuous channels therebetween (fig. 2). According to one object of the invention, the annular particle separator assembly has a corrugation angle which relative to the main flow direction in either direction, at least in one of the screens, is 1-89 degrees, preferably within the range of 20-60 degrees. According to one object of the invention, the annular particle separator component has corrugated, meshed screens, mats, membranes and/or foils, having a crest height (h1, h2) within the range of 0.2-200 mm, preferably 0.8-3 mm. The corrugation height (h1 and h2) for a screen used in a partial filter can be selected to comply with a particular project in terms of structure, back pressure and emission regulations (fig. 3). The crest height can be equal or unequal in various screens. The height can be varied within the range of 0.2-200 mm, the preferred range being 0.8-3 mm. The corrugation angle can also be varied within the range of -89 to +89 degrees, the preferred range being -60 to -20 and +20 to +60 degrees. The minus and plus sign angles stand for angles in opposite directions with respect to the main flow direction. It is practical to use one and the same oblique corrugated screen material, to make a pair of screens thereof by turning one of the screens inside out, such that the corrugation crests extend in diverse directions and provide support against each other. This enables providing a RAPE (annular open particle separator) constructed from one and the same screen. The ratio between the height and width of a corrugation can be varied over a very extensive range by using either low and wide corrugations or high and narrow corrugation crests. These oblique corrugated screens are made by running a straight screen through helical gears for establishing a corrugated structure. Between two oblique corrugated screens can also be present an uncorrugated screen or a permeable wall, whereby the diminishing channel size enhances material transfer and collecting capacity. Between the permeable walls can also be present an impermeable foil or wall used for encasing the segments to prevent any mingling therebetween. This can be used for regulating active or passive regeneration.

According to one object of the invention, the annular particle separator component includes some screen with a filament thickness of 0.1-5 mm, preferably within the range of 0.1-1 mm, and the meshes have a hydraulic diameter of 0.05-10 mm, preferably 0.1-2 mm. The screen can be woven or otherwise coherent. The reason for an extensive range is the existence of highly diverse uses or purposes. In very dirty projects the screen is sparser and the corrugation has a major height, and in clean projects the screen is denser and the corrugation has a minor height. It is possible to use a very thin filament and/or large mesh for the corrugated screen and a very dense screen for the straight screen, which enables the screen to be rolled up with quite a major corrugation angle (40-80 degrees). Instead of or together with the screen, it is also possible to use fiberboards or membranes processed for a corresponding structure, which features respective mesh-es/thicknesses in the walls and which is partly permeable to fluid. The assembly shown in fig. 2 may further comprise extra or optional flow barriers, constrictions/enlargements or claws/vanes, which enhance material transfer and collecting efficiency and create an open particle separation assembly.

According to one object of the invention, upstream or downstream of the annular open particle separator is provided at least one annular, cell type, catalyst-coated structure, which is preferably made of metal. Upstream of the basic structure in the flowing sequence can be at least an oxidation catalyst (7), the functional purpose of which is to effectively oxidize gaseous impurities, such as carbon monoxide, hydrocarbons, carbon (particles) and NO into water, CO₂ and NO₂, which can be utilized in the regeneration of a partial filter or in the oxidation catalyst itself. The oxidation catalyst may also have integrated therewith some reduction and/or adsorption-reduction capability for oxides of nitrogen.

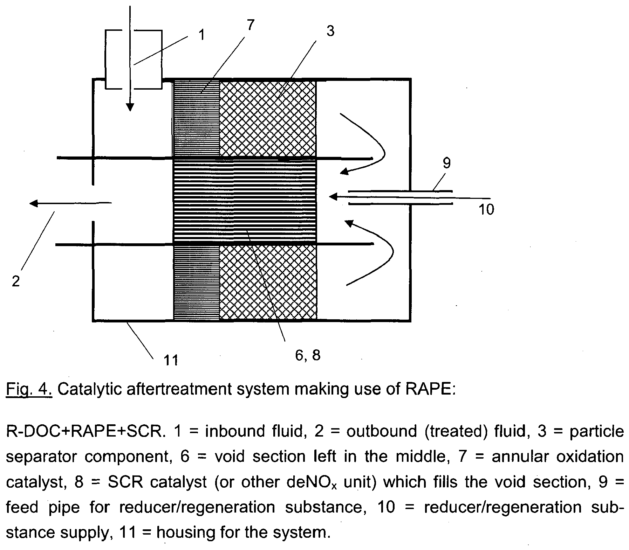

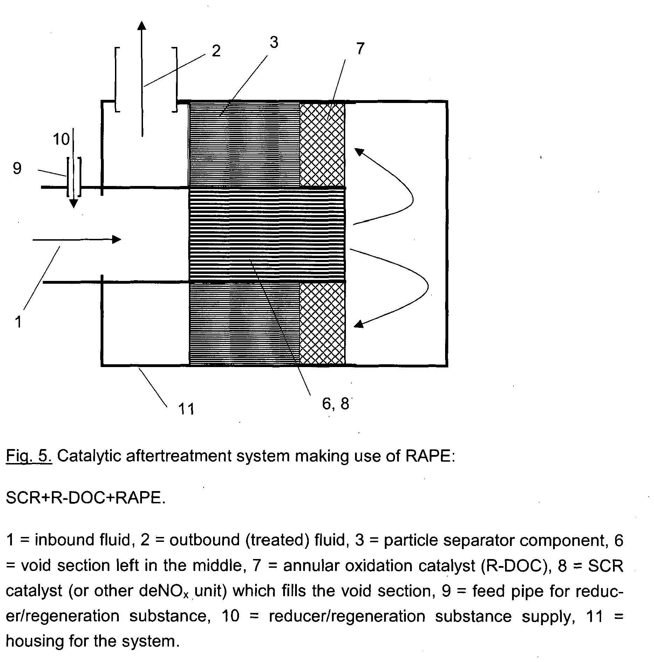

The oxidation catalyst can be in the middle of a RAPE (fig. 3), or it can also be an annular (R-DOC, fig. 4), preferably metallic catalyst cell. In the same housing can also be accommodated an SCR catalyst or some other aftertreatment unit. RAPE may also be located downstream of SCR, in which case the regeneration must be worked out differently from the case in which SCR is on the downstream side (fig. 5). If the open particle separator is located downstream of SCR, the NOₓ and NO₂ contents are low, but in projects in which the NOₓ emission is not too low and in which are used high temperatures (>400°), it is pos sible to regenerate RAPE also downstream of SCR. In addition, the regeneration of RAPE can also be conducted by making use of external energy (electricity-based heating or start-up of particulate combustion, fuel injection).

The SCR catalyst capable of being used in the assembly and system is ceramic, extruded or metallic. Its main composition is V-W/TiO₂ (V-W/TiO₂-SiO₂), Fe-zeolite and/or Cu-zeolite. The zeolite is of ZSM-5, Beta, mordenite, ferrierite and/or Y type or the like zeolite hydrothermally stable in operating conditions. In addition, useful in such catalysts as additives, or in place of V, Fe and/or Cu in the support medium, among others, are La, Y, Zr, Ce, W, B, Co, Fe, Ni, Cu, Cr, Mn, Mo, Nb and/or Al. AI-, Si- and Ti-oxide can also be used as a binder in catalysts to be coated. Downstream of the SCR catalyst, the system may also have an ammonia slip catalyst (ASC) with a purpose of removing the ammonia slipping through the SCR catalyst. The ASC catalyst may have a composition similar to that of the oxidation catalyst, or its composition is equal to that of the SCR catalyst to which is added a small amount of Pt or Pd (charge about 0.01-2 g/dm³, preferably 0.05-0.5 g/dm³). Using the SCR catalyst composition together with a precious metal provides an ASC catalyst which has a high selectivity for nitrogen in NOₓ+NH₃ reactions.

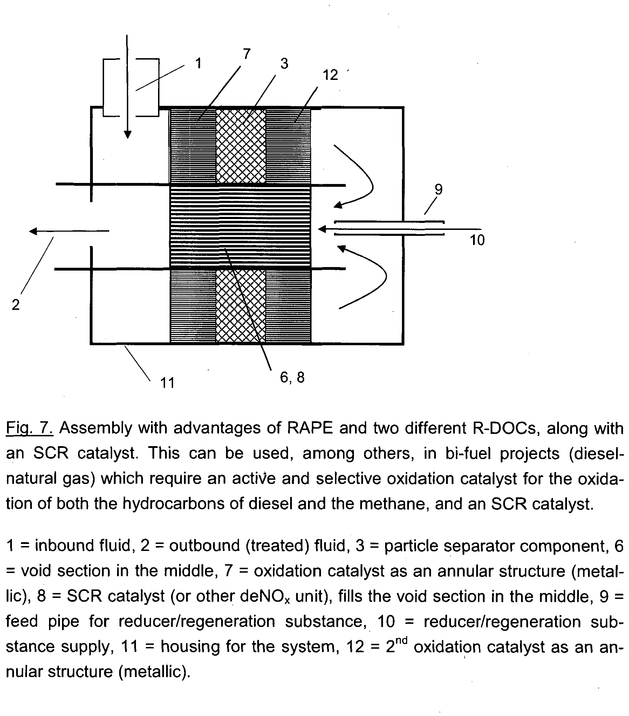

In bi-fuel designs, for example, it is feasible to use a configuration which comprises an R-DOC and an annular second oxidation catalyst, and an SCR catalyst in the middle (fig. 7). In such designs, fuel is being switched according to current operation. The second oxidation catalyst has possibly been designed for diesel exhaust gases and for a high NO₂ output (DOC), and a second ring cell located downstream of RAPE is active for example in the oxidation of methane. In the first operation, the precious metal is predominantly Pt, and in the latter one Pd which is active in the oxidation of methane. According to one object of the invention, the annular particle separator component includes a support medium, which contains aluminum oxide, silicon oxide, titanium oxide, zeolite, zirconium oxide and/or cerium oxide. The support medium compositions are also diverse, and the Pd containing operation makes use of a support medium containing more aluminum than the one used in DOC.

If the outside and inside/the periphery are both provided with an open particle separator, one can be more effective (denser) than the other. The dense cell refers to a cell, which has a higher particulate separating capacity (APE cell, higher mesh numbers) and back pressure. Placing the cells in a nested configuration enables regulation/equalization of heat transfer, particularly during regeneration, since the flows are countercurrent to each other in various cells. The nested configuration enables maintaining simultaneously a high linear velocity and a high separator volume, required by the open particle separator and needed for collecting particles. This would not be possible if the same volume and diameter were applied to a single cell in which the flow would proceed in one direction. Thus, the flow proceeds in one direction through a first unit and then in the other direction through a second unit. Even though the inner and outer peripheral units are adjacent and nested, the units are totally in succession with respect to the flow. Accordingly, the cells and units do not constitute alternate flow paths but, instead, a sequential structure which has been constructed by placing the cells in a nested configuration and, especially according to the invention, by providing therein an annular partial particle separator of flexible construction, which is thus on the outer periphery. If the denser (more effective, higher mesh number) cell is located upstream, particles start already to build up in the first cell and it fills up faster, whereby the regeneration can be commenced from there. If the sparser one (less effective, lower mesh number) is located upstream, particles on average will be able to advance further in the cell, basically leaving in the upstream location more storage capacity and more catalyst material with possible development of regenerating NO₂.

According to one object of the invention, the annular particle separator component has its outer skin and inner skin constructed from a flexible material. According to one object of the invention, the annular particle separator component has its outer skin and inner skin constructed from a metal. An advantage is offered by this/these both in manufacture and operation.

According to one object of the invention, the annular particle separator component is made of a metal and/or a fibrous material and/or some other flexible material, and that the void section in the middle houses a catalyst or particle filter structure which is ceramic or made of another suchlike stiffer material. Thereby, the coherent cell in the middle can be supported and given mechanical strength, and the annular component is sturdy and, being flexible, easy to install around the stiffer structure. Flexible material is typically present in a particle separator of the invention which is constructed from flexible screens and mats.

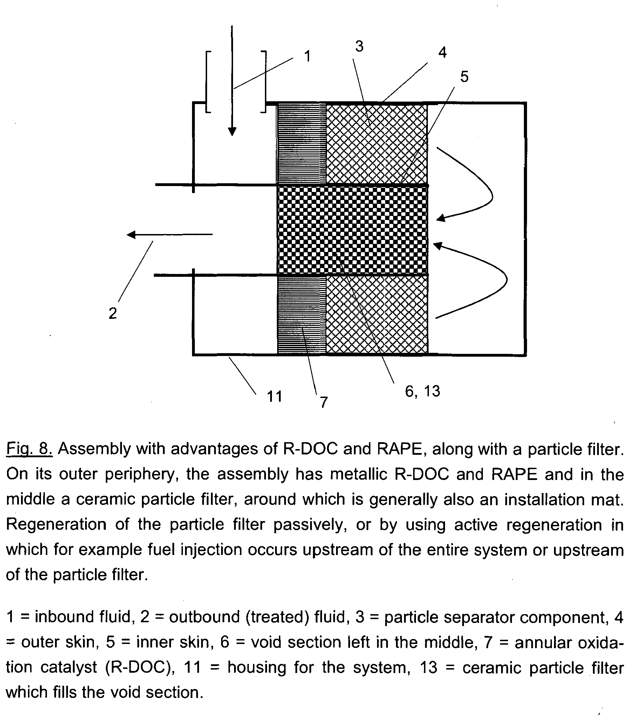

In the event that the system has in the middle a ceramic particle filter cell (cordierite, silicon nitride, aluminum titanate, a mixture thereof or the like), around it can be installed an annular RAPE (fig. 8). The ceramic cell would naturally be in the middle, and around it is an annular metallic RAPE which can be constructed, as described above, from corrugated metal structures (screens). The ceramic particle filter is not easy to make as a ring structure, nor does it have a good strength as a thin ring structure, which is why this sequence is the most sensible and durable in technical sense. The particle separating efficiency of a full filter is high (usually within the range of 80-100%), which PM efficiency (e.g. 50-80%) is higher than that of the RAPE (3). The full filter is usually a cell type filter, wherein the fluid is compelled to pass through a filtering wall on its way. Between the ceramic cells and the inner skin is usually also an installation mat, which supports and secures the ceramic cell in place. A flexible RAPE material can also be used to replace this installation mat partially or completely for reducing the size of the structure. The full filter can also be a deep filter constructed from ceramic foam, fiber (metal, ceramics, metal oxides or mixtures thereof), a sintered metal or from the like high-performance particle filtration materials. Such a system assembly enables making use of the good qualities of each structure. If there is a ceramic particle filter in the middle, the system also enables the use of various regeneration practices for such filter. The full filter can be subjected to active regeneration based on fuel injection and/or raising temperature electrically, but the regeneration of RAPE would be based on passive regeneration. At the same time can also be conducted an adjustment of the A/F ratio to a lower level, which also increases temperature.

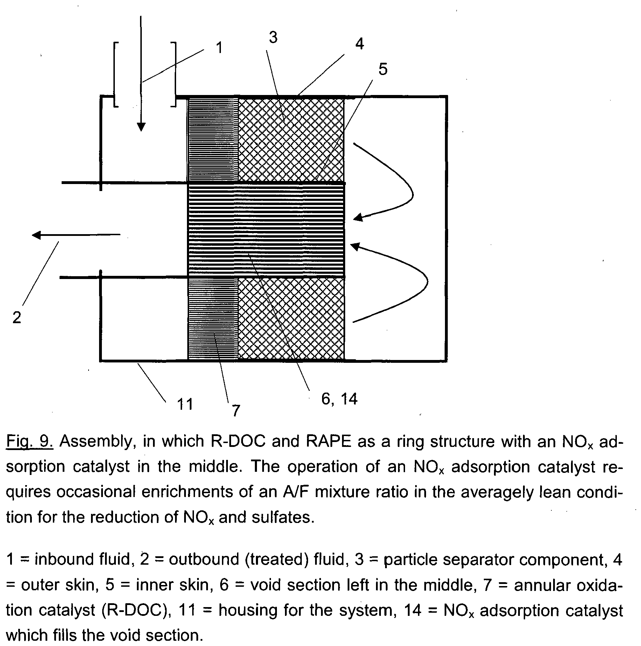

Along with the annular open particle separator can be used an NOₓ adsorption catalyst placed likewise in the middle (fig. 9). In this case, the fluid is first stripped of gaseous CO and hydrocarbon and particles in R-DOC and RAPE, and then of oxides of nitrogen in the NOₓ adsorption catalyst. In this system, the lean mixture is from time to time subjected to enrichments, in which the adsorbed oxides of nitrogen are reduced and the catalyst is stripped of sulfates. It is also possible to integrate within the RAPE structure also the composition of an NOₓ catalyst, which contains precious metals (Pt, Rh, Pd, Ir) and typical NOₓ adsorption compounds: alkali and alkaline earth metals, Mn, Ce, La and/or Y.

One special solution is such that the cells of inner and outer periphery are similar to each other, but one of the cells is considerably shorter. This can be used to make a difference in pressure losses, space utilization and heat transfer, depending on properties required for the system.

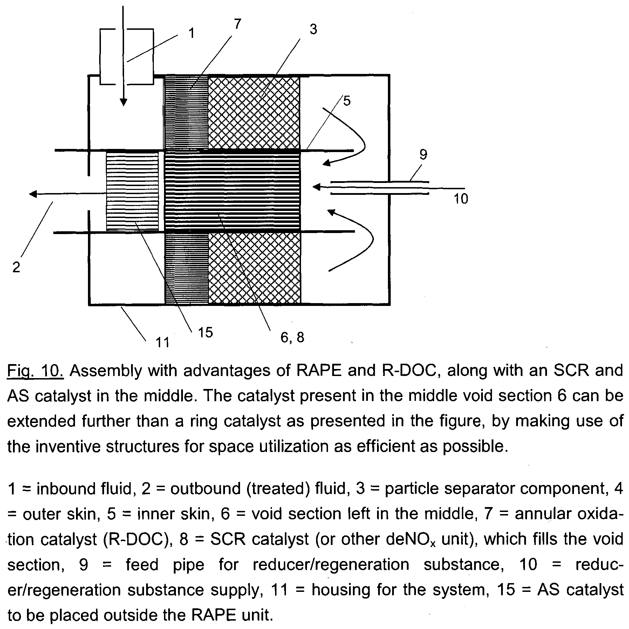

When RAPE and R-DOC are used on the outer periphery, on the inside can be not only the SCR catalyst but also an AS catalyst (Ammonia-Slip) (15), which is assigned to catalyze a removal process of NH₃ slipping through the SCR (fig. 10). Typically, this catalyst comprises precious metals in an oxidation or SCR catalyst support medium. When the composition is based on an SCR catalyst, the selectivity in the NH₃+NOₓ reaction can be optimized as much as possible into nitrogen instead of NH₃ reacting into NOₓ or laughing gas. The catalyst in the middle can also be longer than ring catalysts present on the outer periphery in case the fluid departs from the middle.

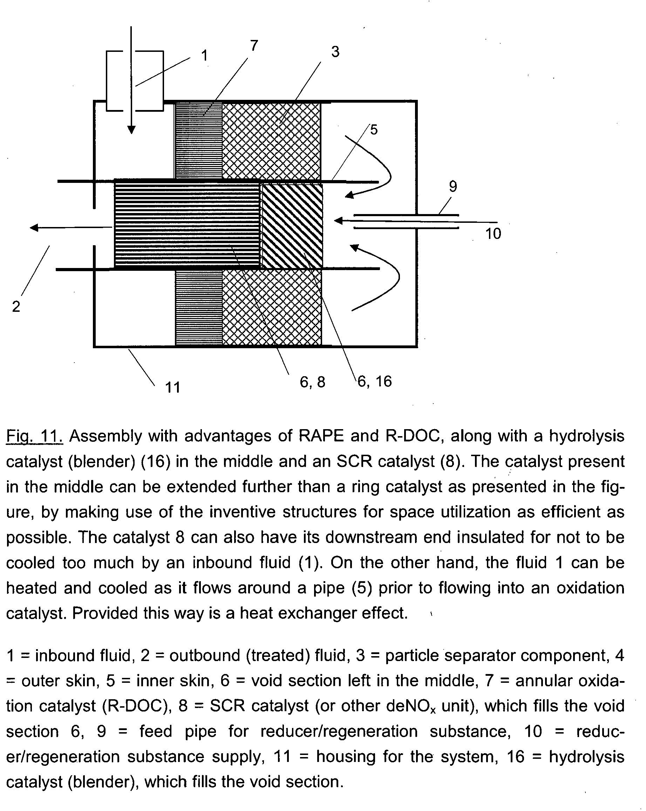

According to one object of the invention, the purifying assembly has, upstream of the units present in the void section, a feed pipe for supplying a reductant or a substance used in regeneration, such as urea, an ammonia derivative, hydrocarbon, fuel and/or an oxidizing compound. The feed pipe is preferably arranged partially inside the inner skin. In the middle, downstream of the urea or other reductant supply, can also be a hydrolysis unit, which can be catalyzed to promote hydrolysis and thermolysis into the actual reductant (fig. 11). The simplest structure is a static blender element whose purpose is to blend the reductant within the fluid as evenly as possible and to function as a material and heat transfer surface. The hydrolysis unit may include one or more separate cells, which have for example unequal mesh sizes (channel sizes) and thereby different blending characteristics and surface areas for a catalyst surface. Preferably upstream is a sparser cell, which is assigned to function as a blender with slight blocking risk, and downstream is a denser cell providing the structure with more geometric surface for coating the catalyst thereon. The coating of a hydrolysis catalyst is preferably such that it promotes desired reactions (thermolysis, hydrolysis and SCR), but does not decompose NH₃ into nitrogen or into NOₓ prior to the SCR reaction under any circumstances. Such compositions are for example catalysts made up of TiO₂, SiO₂, Al₂O₃, WO₃ and/or ZrO₂. In addition, the unit may incorporate some SCR catalyst, whereby some of the hydrolysis and SCR properties have been integrated with each other. The assembly also enables the use of a combination of figs. 9 and 10, which thus has 3 units in the middle sequenced as: a hydrolysis unit, an SCR catalyst and an AS catalyst. The catalyst present in the middle may also extend beyond the housing in the figure for additional volume. These three catalysts/units may also be of different sizes in diameter, the hydrolysis and AS units being typically smaller in diameter. It is also possible to coat one or more successive RAPE structures with a hydrolysis/SCR catalyst, whereby the reductant supply would be upstream of this structure.

The RAPE can be completely or partially in flow direction coated with a porous support medium, functioning as a primer for active compounds which activate CO, hydrocarbons, NO, hydrogen, ammonia or carbon. Hydrocarbons may also contain functional groups which in turn contain oxygen, nitrogen or halogens. The coating of RAPE has been conducted in such a way that the screen meshes are left at least partially open at least in one of the screens. Alternatively, the structure has no coating at all, whereby it only functions as a particulate collector and muffler. In that case, the regeneration of particles is based on NO₂, which is generated in the oxidation catalyst and which oxidizes particles in RAPE. In addition, the catalyst may possess some NOₓ reduction capability, whereby, when the reductant consists of hydrocarbons or ammonia, it can adsorb oxides of nitrogen (reduction in rich conditions) or oxidize ammonia. Typically, the catalyst contains aluminum, silicon, titanium oxides and/or zeolites in a support medium. The coating has a thickness within the range of 1-500 micrometers, preferably within the range of 5-40 micrometers. The coating surface area is determined by employed raw materials, and it is within the range of 1-1000 m²/g, usually within the range of 20-300 m²/g. The coating can be added onto the separators from sources of various slurries, sols and/or solutions by dipping, pumping, sucking and/or spraying. The screens can be coated while open and out of contact with their matching screens by spraying and only then rolled up for a screen and RAPE assembly established by the RAPE. This way it is possible to ensure that the screen meshes remain open. Hence, the RAPE is provided with a mechanically durable coating, which nevertheless leaves the screen meshes open. The coating can also be conducted entirely or partially by means of evaporating starting materials (CVD, Ale techniques).

The active metals employed in catalyst coatings comprise e.g. precious metals, such as platinum (Pt), palladium (Pd), iridium (Ir) and/or rhodium (Rh) and/or iridium (Ir) and/or ruthenium (Ru). The active components can be added into the coated catalyst composition by absorption (dry, wet or chemisorption methods) or by being blended within a coating slurry, solution or sol. The active components can be pre-absorbed into the raw material particles of a catalyst prior to mixing and coating the slurry. The coating and/or absorption processes involve the use of water or other solvents or mixtures thereof, generally in liquid phase.

The amount of active metal (e.g. precious metal) is 0.01-10 g/dm³, preferably 0.1-3 g/dm³. If there are several structures in succession, the amount of active metal in the first upstream one can be preferably 0.8-2 g/dm³ and in the next downstream one/ones 0-0.8 g/dm³. An objective is to supply one and the same structure e.g. with more Pt on what is the inlet side in the flow direction, thus producing more NO₂ there. On the outlet side, there is no time for Pt to catalyze as much the oxidation of NO for passive regeneration, whereby the charge there is lower. On the outlet side may also be present other active components, such as Pd. This structure can be used jointly with a cleaning (oxidation) catalyst located upstream thereof.

The active component is selected according to usage. The platinum-containing catalyst coatings with a suitable support medium can be used for accelerating the formation of NO₂, which promotes the combustion of particles and the regeneration of a purifying e.g. in diesel projects. All Pt-containing catalysts do not provide a high NO₂ content, because the use of suitable additives (e.g. vanadium) in the support medium enables preventing the formation of NO₂ and thereby sulfates. The reduction of NO₂ formation is intended for projects in which the objective is to minimize NO₂ emissions or the regeneration of particles does not require a high amount of NO₂. Pd can be used as an active component, when the catalyst coating is intended for catalyzing the oxidation of CO and HC without the formation of NO₂ and when temperatures are high in working or regeneration conditions.

Promoters employed in the support medium may comprise e.g. vanadium (V), tungsten (W), iron (Fe), zirconium (Zr), cerium (Ce), lanthanum (La), manganese (Mn), cobalt (Co), barium (Ba), strontium (Sr) and/or nickel (Ni). The support medium may also consist for the most part of these compounds of promoters. Into the coating can be added, e.g. by absorption, typical NOₓ adsorption compounds, enabling oxides of nitrogen to be adsorbed in a lean mixture and to reduce the same during a rich mixture.

In a system of the invention, the full filters can be provided with similar type coatings as the RAPE or with a coating, added preferably in the form of sol, which coats the fibers or pores of a collecting unit with a thin catalyst layer without blocking the channels or raising the back pressure at that location. The sol refers to a liquid, in which are dispersed small particles having an average diameter within the range of 5-1000 nm, preferably within the range of 15-100 nm, which particle size enables even small pores and fibers to be uniformly coated. The particles can be e.g. Al, Si Ti, Zr, Ce, Mn, V, Cr, Co, Sr, La, Y, Pr oxides. The amount of coating is typically 0.1-30% of the weight of a full filter, and the active component is typically a precious metal such as Pt, Pd, Rh or a mixture thereof. Otherwise can be used the same promoters, active metal charges/addition practices and treatments as those used for other catalyst coatings.

In RAPE, particle filters, and catalysts, it is possible to use compounds (V, Cr, Mn, Co, Sr) promoting the catalytic combustion/ignition of soot, and thermally stable oxides (La, Y, Zr) which protect separators from thermal stress.

The cleaning catalyst upstream of the separators involves the use of coating compositions similar to those used in the RAPE. The cleaning catalyst differs typically from the RAPE in the sense that the amount of coating is usually higher, i.e. about 50-500 g/L, and the amount of active metal is also higher, typically 1-5 g/L. The cleaning catalyst body is a ceramic or metallic cell with a mesh number within the range of 1-2000 cpsi, preferably within the range of 50-600 cpsi.

The units coated with catalysts can be treated during a manufacturing process in static or dynamic conditions with oxidizing and/or reducing gas mixtures, which may include air, oxygen, hydrogen, carbon monoxide, ammonia, exhaust gas, hydrocarbons, water or some inert gas. The treatments can also be used for preparing various mixed oxides between the coating compounds by using suitable starting materials, particle sizes and finishing conditions.

The RAPE has its screen secured by welding, soldering, or around the screen cell is stuck a metal nail or spike, which can be in attachment with the inner pipe and/or with the outer skin. By using a oblique corrugated screen or the like perforated elements, a contact point is established between the corrugation crests at which the crests touch each other directly or with just a thin, e.g. 10-100 µm layer of support medium therebetween. Heat sources (electrically working heating systems or devices), associated with active regeneration, can also be integrated with these structural elements responsible for mechanical attachment. If the RAPE houses a ceramic full flow filter, it is supported on the skin or mantle with a flexible installation mat capable of withstanding high temperatures. Thus, around the cell in the middle is an installation mat and a mantle, and the RAPE present around it does not need a separate, bulky installation mat, thus facilitating the structure manufacturing process.

The purifying assembly can be canned in a shell, which is e.g. a conventional mantled catalyst converter, wherein the cell can be uninsulated or have an insulation/installation mat and/or heat shields around it. The assembly can also be integrated with a muffler, which may also include other functional units (oxidation or deNOₓ catalyst (SCR, LNT), a full filter, and additional units associated with the operation of these units). The form of an annular cell can be round, oval, racetrack, or a combination of these forms. Thus, it is possible to press the flexible screen material to form not only a round structure but other forms as well. The overall assembly is defined by the shape and external dimensional limitations of a built-in unit.

Thus, the assembly according to the invention enables especially the amount of particulate emissions to be cut down from effluent gases. The normal conditions are lean (excess oxygen) or averagely lean in lean-rich conditions. It is also possible to use the assembly e.g. in gasoline direct injection projects, which also enable making use of this type of open particle separator. The regeneration of particles is conducted by utilizing passive regeneration as much as possible for the optimization of fuel efficiency. The purifying, or parts thereof, may also replace some of the ordinary elements used in muffling.

Hence, the particles collected on the separators are regenerated passively and/or actively by using external energy (fuel, electricity, etc.). In the case of exhaust gases containing excess oxygen, upstream of the assembly can be installed an oxidation catalyst (DOC), which oxidizes CO, HC and NO. The resulting NO₂ slowly oxidizes carbon-based particles. The DOC can be an ordinary closed cell or in the shape of a ring cell similar to RAPE. The technically most preferred solution also for the annular catalyst cell is a metallic cell which can be easily rolled up for an annular cell, which can even be in the same shells as RAPE. The oxidation catalyst can be located in a separate canning upstream of a structure of the invention. The DOC can also be inside an inlet pipe of the main cleaning unit's canning. The temperature of separators can be raised externally by burning hydrocarbons or by using other exothermic (heat generating) reactions, which take place in (catalyzed) separators or in an oxidation catalyst. Additional heat is generated by feeding fuel into the exhaust gas and/or by post-injection into the engine. At the same time, the amount of combustion air can also be reduced (by reducing the A/F ratio). Additional heat for the regeneration of a catalyst structure can be generated by electric heating, burners and/or plasma and/or some other method capable of heating the structure and/or soot. The buildup of particles can also be enhanced by electrostatic methods, by using pairs of screens in a charged state as collecting screens and by isolating the screens from the rest of the structure and from each other. The regeneration of particles with an assembly of the invention can also be enhanced by using additives, which promote the combustion of soot (FBC = Fuel-Born Catalyst) and which contain for example Fe-, Sr- and/or Ce-based compounds. By feeding additives and using active regeneration at the same time, the carbon of particles can be ignited more easily.

From the combustion of particles must be obtained such an amount of heat that the temperature of RAPE rises momentarily to more than 500-600°C, which is sufficient for thermal combustion, which can also be assisted by a catalyst present in the separators or entrained in the exhaust gas. If the thermal energy of particles present in RAPE is to be exploited, it is essential that the separators will have collected thereon an amount of particles sufficient for heating and sustaining combustion for as long as it takes to have the separator regenerated entirely or partially.

The RAPE according to the invention works as a good insulator for a cell inside. Heat losses are small, because the external cell functions as an insulator and the operation of a unit in the middle can be commenced at operating temperatures as low as possible in comparison with systems which would have one and the same unit in direct communication with outside air by way of the mantle. Thus, the regeneration operating with external energy can be focused on a separator in the middle, whereby the external energy and combustion heat are spreading and become concentrated, thus promoting regeneration.

The particulate separation efficiency of wall-flow filters is high, i.e. 90-100%, usually about 97-99.8%. In deep filters, the PM separation efficiency is about 50-95%, usually 70-90%. In open particle separators, the PM separation capacity is 30-80%, usually 40-70%. In ordinary catalyst cells, the PM conversion follows the VOF content and is about 10-60%, usually about 20-40%.

The passive regeneration of separators calls for the use of high Pt charges in the large upstream oxidation catalyst and in the separators. Most of the Pt is needed for raising the NO₂ content within the range of 200-300°C.

Upstream of the purifying assembly can also be fed not only hydrocarbons and known fuels but also other oxidizing and reducing compounds, such as ammonia, urea, ozone, hydrogen peroxide, air, oxygen and/or water, pure or in mixtures. This enables promoting the reaction of NOₓ and/or particles and maintenance of the purifying, and adjusting the stoichiometry of reactions.

## Claims

1. A purifying assembly for the treatment of particulate-containing fluids, wherein the purifying assembly comprises
at least one particle separator, wherein the particle separator comprises an annular open particle separator structure for allowing a flow of fluid in an axial direction of the particle separator, which annular open particle separator structure has an annular particle separator component (3) comprising coupled-together, corrugated, meshed screens, mats, membranes and/or foils and having tortuous open channels therebetween, and the annular particle separator component (3) has been arranged between an outer skin (4) and an inner skin (5), the outer skin (4) and the inner skin (5) being formed from a metal, a fibrous material and/or some other material, and
a void section (6) inside the particle separator, into which void section (6) at least one functional unit filling the void section (6) is installed, the functional unit being an oxidation catalyst, a removal catalyst for oxides of nitrogen, a full filter, an open particle separator, a three-way catalyst, a reformation catalyst, an ammonia slip catalyst and/or urea hydrolysis unit.

2. A purifying assembly according to claim 1, wherein the annular particle separator component (3) comprises at least two adjacent oblique corrugated metallic meshed screens, membranes or foils, the corrugation crests of which extend in diverse directions with respect to each other, thus having open tortuous channels therebetween.

3. A purifying assembly according to any of the preceding claims, wherein upstream or downstream of the annular open particle separator is at least one annular, cell type, catalyst-coated structure which is preferably made of metal.

4. A purifying assembly according to any of the preceding claims, wherein the annular particle separator component (3) has been coated with a catalyst, which catalyzes the oxidation of hydrocarbons, carbon monoxide, hydrogen, oxides of nitrogen, ammonia and/or particles, and/or the reduction of oxides of nitrogen with hydrocarbons, ammonia and the like reductants, and/or which adsorbs oxides of nitrogen.

5. A purifying assembly according to claim 4, wherein the catalyst contains platinum, palladium, rhodium, iridium, ruthenium and/or vanadium, which catalyze the oxidation and/or reduction reaction of exhaust and effluent gases.

6. A purifying assembly according to any of the preceding claims, wherein the annular particle separator component (3) has been coated with a catalyst in such a way that the meshes remain open.

7. A purifying assembly according to any of the preceding claims, wherein the annular particle separator component (3) comprises a support medium, which contains aluminum oxide, silicon oxide, titanium oxide, zeolite, zirconium oxide and/or cerium oxide.

8. A purifying assembly according to any of the preceding claims, wherein the ratio between the face areas of the annular particle separator component (3) and the void section (6) in the middle of the particle separator is within the range of 0.05-0.95, preferably 0.2-0.7.

9. A purifying assembly according to any of the preceding claims, wherein the annular particle separator component (3) comprises a screen, the filament of which has a thickness of 0.1-5 mm, preferably within the range of 0.1-1 mm, and the meshes of which have a hydraulic diameter of 0.05-10 mm, preferably 0.1-2 mm.

10. A purifying assembly according to any of the preceding claims, wherein the annular particle separator component (3) has a corrugation angle relative to the main flow in either direction, which at least in one of the screens is 1-89 degrees, preferably within the range of 20-60 degrees.

11. A purifying assembly according to any of the preceding claims, wherein the annular particle separator component (3) comprises screens, mats, membranes and/or foils, which are corrugated, contain meshes and which have a crest height (h1, h2) within the range of 0.2-200 mm, preferably 0.8-3 mm.

12. A purifying assembly according to any of the preceding claims, wherein the annular particle separator component (3) has been formed from metal and/or fibrous material and/or some other flexible material, and the at least one functional unit is a catalyst or particle filter structure, which is ceramic or formed from other stiffer material.

13. A purifying assembly according to any of the preceding claims, wherein the annular particle separator has been arranged to remove particles, and the at least one functional unit is a removal unit for oxides of nitrogen, such as for example an SCR catalyst or an NOₓ adsorption catalyst.

14. A purifying assembly according to any of the preceding claims, wherein in the fluid flow direction upstream of the units housed in the void section (6), there is a feed pipe (9) for supplying a reductant or a substance (10) used in regeneration, such as urea, an ammonia derivative, hydrocarbon, fuel and/or an oxidizing compound.

15. A method for the manufacture of a purifying assembly for the treatment of particulate-containing fluids, wherein the purifying assembly is provided with
at least one particle separator comprising an annular open particle separator structure for allowing a flow of fluid in an axial direction of the particle separator, which annular open particle separator structure is provided with an annular particle separator component (3) comprising coupled-together, corrugated, meshed screens, mats, membranes and/or foils and having tortuous open channels therebetween, and the annular particle separator component (3) is arranged between an outer skin (4) and an inner skin (5), the outer skin (4) and the inner skin (5) being formed from a metal, a fibrous material and/or some other material, and
at least one functional unit installed into a void section (6) inside the particle separator, the functional unit being an oxidation catalyst, a removal catalyst for oxides of nitrogen, a full filter, an open particle separator, a three-way catalyst, a reformation catalyst, an ammonia slip catalyst and/or urea hydrolysis unit.

16. The use of a purifying assembly according to any of claims 1-14 in exhaust, flue gas, and effluent gas applications in mobile or stationary projects.

## Patentansprüche

1. Aufreinigungsanordnung zur Behandlung von partikelhaltigen Fluiden, wobei die Aufreinigungsanordnung Folgendes umfasst:
mindestens einen Partikelabscheider, wobei der Partikelabscheider eine ringförmige, offene Partikelabscheiderstruktur zum Ermöglichen eines Fluidstroms in einer axialen Richtung des Partikelabscheiders umfasst, wobei die ringförmige, offene Partikelabscheiderstruktur eine ringförmige Partikelabscheiderkomponente (3) aufweist, die miteinander gekoppelte, gewellte, vermaschte Siebe, Matten, Membranen und/oder Folien umfasst und dazwischen gewundene, offene Kanäle aufweist, und die ringförmige Partikelabscheiderkomponente (3) zwischen einer Außenhaut (4) und einer Innenhaut (5) angeordnet worden sind, wobei die Außenhaut (4) und die Innenhaut (5) aus einem Metall, einem Fasermaterial und/oder einem anderen Material gebildet sind, und
einen Hohlraumabschnitt (6) innerhalb des Partikelabscheiders, wobei in den Hohlraumabschnitt (6) mindestens eine funktionelle Einheit installiert ist, die den Hohlraumabschnitt (6) füllt, wobei die funktionelle Einheit ein Oxidationskatalysator, ein Entfernungskatalysator für Stickoxide, ein Vollfilter, ein offener Partikelabscheider, ein Dreiwegekatalysator, ein Reformationskatalysator, ein Ammoniakschlupfkatalysator und/oder eine Harnstoffhydrolyseeinheit ist.

2. Aufreinigungsanordnung nach Anspruch 1, wobei die ringförmige Partikelabscheiderkomponente (3) mindestens zwei benachbarte, schräge, gewellte, metallische, vermaschte Siebe, Membranen oder Folien umfasst, deren Wellenscheitel in unterschiedlichen Richtungen in Bezug zueinander verlaufen, sodass sie dazwischen offene, gewundene Kanäle aufweisen.

3. Aufreinigungsanordnung nach einem der vorhergehenden Ansprüche, wobei sich stromaufwärts oder stromabwärts des ringförmigen, offenen Partikelabscheiders mindestens eine ringförmige katalysatorbeschichtete Struktur vom Zelltyp befindet, die vorzugsweise aus Metall besteht.

4. Aufreinigungsanordnung nach einem der vorhergehenden Ansprüche, wobei die ringförmige Partikelabscheiderkomponente (3) mit einem Katalysator beschichtet worden ist, der die Oxidation von Kohlenwasserstoffen, Kohlenmonoxid, Wasserstoff, Stickoxiden, Ammoniak und/oder Partikel und/oder die Reduktion von Stickoxiden mit Kohlenwasserstoffen, Ammoniak und ähnlichen Reduktionsmitteln katalysiert und/oder der Stickoxide adsorbiert.

5. Aufreinigungsanordnung nach Anspruch 4, wobei der Katalysator Platin, Palladium, Rhodium, Iridium, Ruthenium und/oder Vanadium enthält, welche die Oxidations-und/oder Reduktionsreaktion von Abgasen und Klärgasen katalysieren.

6. Aufreinigungsanordnung nach einem der vorhergehenden Ansprüche, wobei die ringförmige Partikelabscheiderkomponente (3) mit einem Katalysator derart beschichtet worden ist, dass die Maschen offen bleiben.

7. Aufreinigungsanordnung nach einem der vorhergehenden Ansprüche, wobei die ringförmige Partikelabscheiderkomponente (3) ein Trägermedium umfasst, das Aluminiumoxid, Siliciumoxid, Titanoxid, Zeolith, Zirkonoxid und/oder Ceroxid enthält.

8. Aufreinigungsanordnung nach einem der vorhergehenden Ansprüche, wobei das Verhältnis der Stirnflächen der ringförmigen Partikelabscheiderkomponente (3) zu dem Hohlraumabschnitt (6) in der Mitte des Partikelabscheiders im Bereich von 0,05-0,95, vorzugsweise 0,2-0,7 liegt.

9. Aufreinigungsanordnung nach einem der vorhergehenden Ansprüche, wobei die ringförmige Partikelabscheiderkomponente (3) ein Sieb umfasst, dessen Filamente eine Dicke von 0,1-5 mm, vorzugsweise im Bereich von 0,1-1 mm aufweisen, und dessen Maschen einen hydraulischen Durchmesser von 0,05-10 mm, vorzugsweise 0,1-2 mm aufweisen.

10. Aufreinigungsanordnung nach einem der vorhergehenden Ansprüche, wobei die ringförmige Partikelabscheiderkomponente (3) einen Wellenwinkel relativ zum Hauptstrom in jeder Richtung aufweist, der mindestens in einem der Siebe 1-89 Grad beträgt, vorzugsweise im Bereich von 20-60 Grad.

11. Aufreinigungsanordnung nach einem der vorhergehenden Ansprüche, wobei die ringförmige Partikelabscheiderkomponente (3) Siebe, Matten, Membranen und/oder Folien umfasst, die gewellt sind, Maschen enthalten und eine Scheitelhöhe (h1, h2) im Bereich von 0,2-200 mm, vorzugsweise 0,8-3 mm aufweisen.

12. Aufreinigungsanordnung nach einem der vorhergehenden Ansprüche, wobei die ringförmige Partikelabscheiderkomponente (3) aus Metall und/oder Fasermaterial und/oder einem anderen flexiblen Material gebildet worden ist und die mindestens eine funktionelle Einheit ein Katalysator oder eine Partikelfilterstruktur ist, die aus Keramik besteht oder aus einem anderen steiferen Material gebildet ist.

13. Aufreinigungsanordnung nach einem der vorhergehenden Ansprüche, wobei der ringförmige Partikelabscheider angeordnet worden ist, um Partikel zu entfernen, und die mindestens eine funktionelle Einheit eine Entfernungseinheit für Stickoxide ist, wie zum Beispiel ein SCR-Katalysator oder ein NOₓ-Adsorptionskatalysator.

14. Aufreinigungsanordnung nach einem der vorhergehenden Ansprüche, wobei sich in der Fluidströmungsrichtung stromaufwärts der Einheiten in dem Hohlraumabschnitt (6) untergebracht ein Zufuhrrohr (9) zum Zuführen eines Reduktionsmittels oder einer Substanz (10) befindet, die bei einer Regeneration verwendet wird, wie etwa Harnstoff, ein Ammoniakderivat, Kohlenwasserstoff, Kraftstoff und/oder eine oxidierende Verbindung.

15. Verfahren zur Herstellung einer Aufreinigungsanordnung zur Behandlung von partikelhaltigen Fluiden, wobei die Aufreinigungsanordnung mit mindestens einem Partikelabscheider versehen ist, der eine ringförmige, offene Partikelabscheiderstruktur zum Ermöglichen eines Fluidstroms in einer axialen Richtung des Partikelabscheiders umfasst, wobei die ringförmige, offene Partikelabscheiderstruktur mit einer ringförmigen Partikelabscheiderkomponente (3) versehen ist, die miteinander gekoppelte, gewellte, vermaschte Siebe, Matten, Membranen und/oder Folien umfasst und dazwischen gewundene, offene Kanäle aufweist, und die ringförmige Partikelabscheiderkomponente (3) zwischen einer Außenhaut (4) und einer Innenhaut (5) angeordnet ist, wobei die Außenhaut (4) und die Innenhaut (5) aus einem Metall, einem Fasermaterial und/oder einem anderen Material gebildet sind, und
mindestens eine in einen Hohlraumabschnitt (6) innerhalb des Partikelabscheiders installierte funktionelle Einheit, wobei die funktionelle Einheit ein Oxidationskatalysator, ein Entfernungskatalysator für Stickoxide, ein Vollfilter, ein offener Partikelabscheider, ein Dreiwegekatalysator, ein Reformationskatalysator, ein Ammoniakschlupfkatalysator und/oder eine Harnstoffhydrolyseeinheit ist.

16. Verwendung einer Aufreinigungsanordnung nach einem der Ansprüche 1-14 bei Abgas-, Rauchgas- und Klärgasanwendungen bei mobilen oder stationären Projekten.

## Revendications

1. Ensemble de purification pour le traitement de fluides contenant des particules, dans lequel l'ensemble de purification comprend
au moins un séparateur de particules, dans lequel le séparateur de particules comprend une structure de séparateur de particules ouvert annulaire pour permettre un écoulement de fluide dans une direction axiale du séparateur de particules, laquelle structure de séparateur de particules ouvert annulaire présente un composant de séparateur de particules annulaire (3) comprenant des tamis à mailles, des tapis, des membranes et/ou des feuilles, cannelés couplés ensemble et dotés de canaux ouverts tortueux entre eux, et le composant de séparateur de particules annulaire (3) a été disposé entre un revêtement extérieur (4) et un revêtement intérieur (5), le revêtement extérieur (4) et le revêtement intérieur (5) étant constitués d'un métal, d'une matière fibreuse et/ou d'une autre matière, et
une section vide (6) à l'intérieur du séparateur de particules, au moins une unité fonctionnelle remplissant la section vide (6) étant installée dans la section vide (6), l'unité fonctionnelle étant un catalyseur d'oxydation, un catalyseur d'élimination d'oxydes d'azote, un filtre intégral, un séparateur de particules ouvert, un catalyseur à trois voies, un catalyseur de reformage, un catalyseur de rejet d'ammoniac et/ou une unité d'hydrolyse d'urée.

2. Ensemble de purification selon la revendication 1, dans lequel le composant de séparateur de particules annulaire (3) comprend au moins deux tamis à mailles, membranes ou feuilles métalliques cannelés obliques adjacents, dont les sommets cannelés s'étendent dans diverses directions les uns par rapport aux autres, ainsi dotés de canaux tortueux ouverts entre eux.

3. Ensemble de purification selon l'une quelconque des revendications précédentes, dans lequel en amont ou en aval du séparateur de particules ouvert annulaire se trouve au moins une structure annulaire, de type cellulaire, revêtue de catalyseur qui est de préférence en métal.

4. Ensemble de purification selon l'une quelconque des revendications précédentes, dans lequel le composant de séparateur de particules annulaire (3) a été revêtu d'un catalyseur, qui catalyse l'oxydation des hydrocarbures, du monoxyde de carbone, de l'hydrogène, des oxydes d'azote, de l'ammoniac et/ou des particules, et/ou la réduction des oxydes d'azote par les hydrocarbures, l'ammoniac et les réducteurs similaires, et/ou qui adsorbe les oxydes d'azote.

5. Ensemble de purification selon la revendication 4, dans lequel le catalyseur contient du platine, du palladium, du rhodium, de l'iridium, du ruthénium et/ou du vanadium, qui catalysent la réaction d'oxydation et/ou de réduction des gaz d'échappement et effluents.

6. Ensemble de purification selon l'une quelconque des revendications précédentes, dans lequel le composant de séparateur de particules annulaire (3) a été revêtu d'un catalyseur de telle manière que les mailles restent ouvertes.

7. Ensemble de purification selon l'une quelconque des revendications précédentes, dans lequel le composant de séparateur de particules annulaire (3) comprend un milieu de support, qui contient de l'oxyde d'aluminium, de l'oxyde de silicium, de l'oxyde de titane, de la zéolite, de l'oxyde de zirconium et/ou de l'oxyde de cérium.

8. Ensemble de purification selon l'une quelconque des revendications précédentes, dans lequel le rapport entre les zones frontales du composant de séparateur de particules annulaire (3) et la section de vide (6) au milieu du séparateur de particules se trouve dans la plage de 0,05 à 0,95, de préférence 0,2 à 0,7.

9. Ensemble de purification selon l'une quelconque des revendications précédentes, dans lequel le composant de séparateur de particules annulaire (3) comprend un tamis, dont le filament a une épaisseur de 0,1 à 5 mm, de préférence dans la plage de 0,1 à 1 mm, et dont les mailles ont un diamètre hydraulique de 0,05 à 10 mm, de préférence de 0,1 à 2 mm.

10. Ensemble de purification selon l'une quelconque des revendications précédentes, dans lequel le composant de séparateur de particules annulaire (3) a un angle de cannelure par rapport à l'écoulement principal dans l'une ou l'autre direction, qui, dans au moins l'un des filtres, est de 1 à 89 degrés, de préférence dans la plage de 20 à 60 degrés.

11. Ensemble de purification selon l'une quelconque des revendications précédentes, dans lequel le composant de séparateur de particules annulaire (3) comprend des tamis, des tapis, des membranes et/ou des feuilles, qui sont cannelés, contiennent des mailles et qui ont une hauteur de sommet (h1, h2) dans la plage de 0,2 à 200 mm, de préférence de 0,8 à 3 mm.

12. Ensemble de purification selon l'une quelconque des revendications précédentes, dans lequel le composant de séparateur de particules annulaire (3) a été constitué de métal et/ou de matériau fibreux et/ou d'un autre matériau flexible, et l'au moins une unité fonctionnelle est un catalyseur ou une structure de filtre de particules, qui est en céramique ou constituée d'un autre matériau plus rigide.

13. Ensemble de purification selon l'une quelconque des revendications précédentes, dans lequel le séparateur de particules annulaire a été agencé pour éliminer les particules, et l'au moins une unité fonctionnelle est une unité d'élimination des oxydes d'azote, telle qu'un catalyseur SCR ou un catalyseur d'absorption de NOₓ.

14. Ensemble de purification selon l'une quelconque des revendications précédentes, dans lequel dans la direction d'écoulement de fluide en amont des unités logées dans la section vide (6), il y a un tuyau d'alimentation (9) pour fournir un agent réducteur ou une substance (10) utilisée dans la régénération, comme l'urée, un dérivé d'ammoniac, un hydrocarbure, un carburant et/ou un composé oxydant.

15. Procédé de fabrication d'un ensemble de purification pour le traitement de fluides contenant des particules, dans lequel l'ensemble de purification est fourni avec
au moins un séparateur de particules comprenant une structure de séparateur de particules ouvert annulaire pour permettre un écoulement de fluide dans une direction axiale du séparateur de particules, laquelle structure de séparateur de particules ouvert annulaire est fournie avec un composant de séparateur de particules annulaire (3) comprenant des tamis à mailles, des tapis, des membranes et/ou des feuilles cannelés couplés ensemble et dotés de canaux ouverts tortueux entre eux, et le composant de séparateur de particules annulaire (3) est disposé entre un revêtement extérieur (4) et un revêtement intérieur (5), le revêtement extérieur (4) et le revêtement intérieur (5) étant constitués d'un métal, d'une matière fibreuse et/ou d'une autre matière, et
au moins une unité fonctionnelle installée dans la section vide (6) à l'intérieur du séparateur de particules, l'unité fonctionnelle étant un catalyseur d'oxydation, un catalyseur d'élimination d'oxydes d'azote, un filtre intégral, un séparateur de particules ouvert, un catalyseur à trois voies, un catalyseur de reformage, un catalyseur de rejet d'ammoniac et/ou une unité d'hydrolyse d'urée.

16. Utilisation d'un ensemble de purification selon l'une quelconque des revendications 1 à 14 dans les applications de gaz d'échappement, de combustion et de gaz effluent dans des projets mobiles ou fixes.
